# FASCICULE DE BREVET EUROPEEN

(11) **EP 0 819 283 B1**
(45) Date de publication et mention de la délivrance du brevet: **13.01.1999**
(21) Numéro de dépôt: 96912069.0
(22) Date de dépôt: 04.04.1996
(51) Int. Cl.: G06K 19/077

(54) **SYSTEME DE COLLECTE D'INFORMATIONS POUR LECTEURS DE CARTES**
DATENSAMMELSYSTEM FÜR KARTENLESEGERÄT
DATA COLLECTION SYSTEM FOR CARD READERS

(30) Priorité: 05.04.1995 FR 9503976
(43) Date de publication de la demande: 21.01.1998
(73) Titulaire: GEMPLUS, 13420 Gemenos (FR)
(72) Inventeur: BARTHELEMY, Serge, F-13000 Aix-en-Provence (FR); VAUDANDAINE, Stéphane, F-13420 Gemenos (FR); LEDUC, Michel, F-13530 Trets (FR)
(86) Numéro de dépôt international: FR9600517
(87) Numéro de publication internationale: WO9631842

(56) Documents cités:
- FR-A- 2 359 562
- FR-A- 2 698 469

## Description

L'invention concerne un système de collecte d'informations pour lecteurs de cartes et notamment pour lecteurs de cartes à puce.

Le paiement de nombreux services utilise maintenant des systèmes à cartes et notamment des cartes à puce. Les systèmes à cartes à puce utilisent souvent des terminaux (lecteurs de cartes) pour effectuer les transactions. Celles-ci sont en général sécurisées avec les cartes du système.

Les applications de tels systèmes sont actuellement situées dans les domaines bancaires, les contrôles d'accès, la distribution d'énergie (gaz, électricité, etc... ), les parcmètres, les machines de jeux, etc... Dans la plupart de ces applications, la nécessité de collecter les transactions effectuées sur le terminal est vitale pour la fonctionnalité et la sécurité du système.

Cependant certains lecteurs de cartes sont reliés à un système central de traitement, ils sont dit "on line", tandis que d'autres lecteurs de cartes sont isolés et ne sont connectés à aucun autre système, ils sont dits "off line".

Dans les terminaux "on line" le problème de collecte se réduit à un développement de logiciel approprié. C'est le cas par exemple des terminaux bancaires ou des compteurs électriques à carte qui possèdent déjà des moyen de communication. Le transfert des informations vers l'unité centrale peut se faire soit à l'initiative du terminal, soit sur interrogation de l'unité centrale.

Dans les terminaux dits "off line", il faut trouver un moyen de transférer les données vers une unité centrale de traitement. Dans ce cas il s'agit de collecter les données par l'intermédiaire d'un opérateur qui devra se connecter au terminal et ici l'ergonomie, la rapidité de transmission, le coût vont être des paramètres fondamentaux dans le choix de la solution. La solution la plus couramment utilisée consiste à connecter un terminal portable ou un PC portable au moyen d'une liaison du type RS232. Les principaux problèmes sont alors :
- la réalisation de la connexion ;
- la fiabilité de la connexion car ce genre de connectique n'est pas prévue pour permettre de nombreuses connexions ;
- le coût du terminal qui pour beaucoup d'applications peut s'avérer décisif pour son utilisation ;
- la fiabilité du transfert de données vers l'unité centrale ;
- la rapidité de la connexion et du transfert vers l'unité centrale.

L'invention concerne une solution permettant de résoudre ces problèmes.

L'invention concerne donc un système de collecte pour lecteur de carte tel que définie à la revendication 1.

La partie intermédiaire peut posséder également un microprocesseur pour la commande et la sécurisation. Il est également possible de prévoir une horloge pour dater les transactions.

Notons que la conversion série/parallèle pour la transmission de données est bien connue en tant que telle : voir par exemple la demande de brevet FR-A-2 359 562.

D'autres particularités et avantages de l'invention apparaîtront clairement dans la description suivante faite à titre d'exemple non limitatif en regard des figures annexées qui représentent :
- la figure 1, une vue en coupe d'un premier exemple de réalisation selon l'invention ;
- la figure 2, un diagramme général d'un exemple de réalisation tel que celui de la figure 1 ;
- la figure 3, une variante de réalisation d'un système selon l'invention.

Les terminaux de transaction (ou lecteurs de cartes) possèdent des contacts de type ISO destinés à être en contact avec des cartes à puces pour échanger des informations avec les cartes qui leur sont connectées.

Typiquement, selon les normes actuelles, les cartes à puces de type cartes de crédit ont un connecteur à huit contacts plans affleurant sur une face principale de la carte. Ces contacts ont les fonctions suivantes :
- VCC et VPP =: tension d'alimentation et de programmation
- VSS =: masse
- CLK =: horloge
- I/O =: données
- RST, FUSE, PROG =: commandes.

La norme ISO 7816 par exemple définit les formes et positions de ces contacts. La carte à puce a des dimensions très similaires (ordre de grandeur 5 x 8 cm de côté) à celles de la carte à mémoire, et une faible épaisseur (de l'ordre du millimètre).

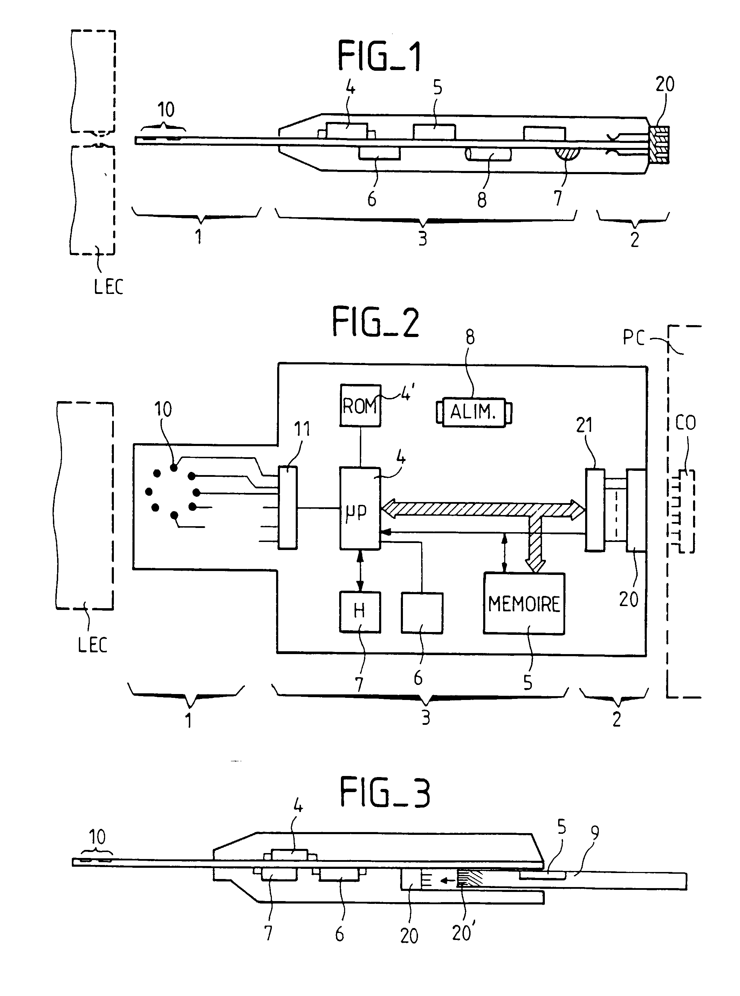

La figure 1 représente un exemple de réalisation du système de collecte d'informations selon l'invention.

Ce système se présente sous la forme d'une carte possédant 3 parties :
- une partie 1 qui a un format équivalent à celui d'une carte à puce et qui possède des contacts 10 sur l'une de ses faces (contacts de type ISO) de telle façon qu'elle puisse être insérée dans un lecteur de cartes et que les contacts établissent les connexions avec les circuits du lecteur de cartes. De façon plus générale, les contacts 10 permettent une transmission série de données d'informations ;
- une partie 2 qui possède un circuit d'interface permettant une transmission parallèle de données d'information. Ce circuit d'interface comporte un connecteur 20. Par exemple, ce connecteur possède 68 broches tel qu'un connecteur PCMCIA (Personal Computer Memory Card International Association) ;
- une partie 3 qui possède des circuits inter-connectant les contacts 10 au connecteur 20. Ces circuits permettent une transformation série/parallèle des informations. Selon l'exemple de la figure 2, ces circuits comportent :
- une mémoire 5 prévue pour enregistrer les données d'informations venant du lecteur de cartes ;
- un microprocesseur 4 pour la gestion de transmission des informations et de façon générale pour gérer le fonctionnement du système ;
- une alimentation (pile) 8 ;
- une horloge 6 ;
- un microprocesseur de sécurité 7 pour assurer la sécurité du système.

Lorsqu'un tel système est enfiché dans un lecteur de cartes, ses contacts 10 assurent une connexion entre le lecteur et le système de collecte de données. Sous la commande du microprocesseur de commande 4 et du microprocesseur de sécurité 7, une transmission série de données d'informations est effectuée du lecteur vers la mémoire 5. Les informations relatives à des transactions effectuées dans ce lecteur sont ainsi "vidées" dans la mémoire 5.

Par la suite, le système de collecte peut être connecté par son connecteur 20 à un microordinateur (tel qu'un ordinateur personnel PC) ou un système informatique plus important.

Le système de collecte se connecte à un microordinateur comme une carte mémoire amovible connue dans la technique. De telles cartes mémoire sont principalement des cartes à mémoire de masse pour ordinateurs portables. Elles pourraient dans l'avenir remplacer les disquettes et autres moyens de stockage de masse de type magnétique. Elles peuvent servir de mémoire de masse d'aussi grande capacité que les disquettes magnétiques (ordre de grandeur : le million d'octets) ; leur encombrement n'est pas plus grand (format carte de crédit, épaisseur de 3 à 5 millimètres) ; elles sont beaucoup plus rapides d'accès (plusieurs milliers de fois plus rapides).

Les cartes à mémoire de masse, parfois appelées encore PC-cards, comportent plusieurs puces de mémoire et un connecteur (connecteur femelle de 68 broches selon la norme PCMCIA de "Personal Computer Memory Card International Association" 1030B East Duane Avenue, Sunnyvale, California). La carte est enfichable dans un connecteur correspondant (mâle) du microordinateur. Les connexions sont telles que la mémoire puisse être adressée par un port d'entrée-sortie parallèle du PC, soit comme si la mémoire était une mémoire de masse magnétique, soit comme si elle était une extension de mémoire vive de microordinateur.

Par carte à mémoire de masse on entendra généralement une carte comportant plusieurs puces de circuits intégrés, et un connecteur à multiples broches en bout de carte. Typiquement, la norme PCMCIA définit de telles cartes avec 68 contacts de sortie pour des dimensions de cartes d'environ 5 centimètres par 8 centimètres et une épaisseur d'environ 3 à 5 millimètres. Il s'agit donc d'une carte essentiellement plane ayant deux faces principales parallèles.

Dans ces conditions le système de collecte selon l'invention peut se connecter par son connecteur 20 à un microordinateur (ou autre système informatique) pour effectuer le transfert parallèle des informations contenues dans sa mémoire 5 et précédemment collectées dans les lecteurs de cartes.

La figure 2, représente un diagramme du système de collecte selon l'invention.

Sur la gauche de la figure 2, on trouve la partie 1 similaire à une carte à puce avec ses plages de connexion 10. Cette partie 1 est enfichable dans le lecteur LEC représenté en pointillés.

Sur la droite de la figure 2, on trouve le connecteur 20 enfichable dans un connecteur CO du microordinateur PC.

Les contacts 10 sont connectés aux circuits de la partie 3 par un circuit d'interface 11 d'entrée-sortie ISO.Le microprocesseur 4 avec sa mémoire programme 4' et la mémoire de données 5 permet de recevoir les données reçues par l'interface 11. Des bus d'adresses, de données et de commande permettent au microprocesseur 4 de gérer la collecte des données et l'écriture dans la mémoire 5.

Les informations de données peuvent ainsi être transférées sous forme série du lecteur LEC à la mémoire 5 où elles sont stockées. Ensuite, lors d'une connexion du système au microordinateur PC, ces informations peuvent être transférées par un circuit d'interface d'entrée-sortie 21, en parallèle, donc rapidement, de la mémoire 5 au microordinateur PC.

Le système de l'invention comporte donc un dispositif de connexion à un lecteur et un interface de transmission série. Il comporte également un interface de connexion pour transmission parallèle. Des circuits permettent de stocker les informations série et de les retransmettre sous forme parallèle.

Plus précisément, l'exemple de réalisation de l'invention présente les caractéristiques suivantes :
- l'interface 21 au format PCMCIA permet de connecter directement le système de collecte sur tout ordinateur pourvu d'un slot PCMCIA. Le système de collecte se comporte donc comme une carte à mémoire de masse lorsqu'il est connecté au travers de cette interface et le transfert d'informations vers l'ordinateur se de maniére habituelle et connue pour les cartes PCMCIA;
- l'interface 11 au format ISO permet de connecter directement le système de collecte sur tout lecteur de carte à circuit intégré (lecteur de carte ISO). Le système de collecte se comporte alors comme une carte à puce et le transfert d'information vers le système de collecte se fait de manière habituelle et connue pour les cartes à circuit intégré;
- le système de collecte comporte un connecteur femelle 68 pins compatible du standard PCMCIA pour lui permettre de se connecter dans n'importe quel slot PCMCIA d'un ordinateur.

L'invention permet ainsi de procurer une vitesse de transfert rapide des données grâce à l'utilisation du port parallèle du bus PCMCIA et par conséquent de pouvoir transférer un plus grand nombre de données en un temps limité.

Il est également possible d'assurer la sécurisation des données grâce à l'utilisation d'un processeur de sécurité connu capable de mettre en oeuvre un algorithme de sécurité lors de la collecte des données à travers l'interface série (ISO) et lors du transfert de ces données à travers l'interface parallèle (PCMCIA). De façon pratique les transferts dans un sens ou dans l'autre ne pourront avoir lieu qu'après mise en oeuvre d'une procédure d'authentification réciproque faisant intervenir un algorithme DES ou RSA exécuté par le processeur spécialisé 7. On peut trouver de tels processeurs sur le marché.

Elle permet en outre l'amélioration de l'ergonomie de connexion et simplification du système grâce à la connexion directe sur le PC (sans lecteur de carte ISO supplémentaire). Il est à noter que le standard PCMCIA impose une grande fiabilité de connexion, de l'ordre de 10000 insertions et il est clair que l'enfichage d'une carte PCMCIA est beaucoup plus aisé que le branchement d'une connexion RS232.

La figure 3 représente une variante de réalisation du système de collecte selon l'invention.

Selon cette variante, le connecteur 20 de la partie 2 est un connecteur mâle. De plus, les circuits de la partie 3 ne comportent principalement que des circuits d'interface série/parallèle recevant les informations sous forme série du connecteur 10 de la partie 1 pour les transmettre sur les broches du connecteur 20 sous forme parallèle. On prévoit par ailleurs une carte 9 du type carte mémoire de masse telle que décrite précédemment qui, équipée d'un connecteur femelle 20', peut se connecter au connecteur 20. Cette carte est équipée d'une mémoire de données (5). Elle est donc capable de recevoir et de stocker les informations de données reçues sur le connecteur 20' sous le contrôle du microprocesseur 7 placé dans la partie 3.

Ensuite, cette carte 9 pourra être déconnectée et connectée à un microordinateur pour transmettre le contenu de sa mémoire au microordinateur. En pratique le microordinateur est équipé d'un connecteur mâle dans lequel est enfichée la carte 9. Cette carte est vue alors par le microordinateur comme une mémoire de masse ou comme une extension mémoire. La mémoire de la carte est adressée par un port d'entrée-sortie parallèle du PC.

L'ensemble de la figure 3 remplit donc les fonctions du système de la figure 2. Par contre, il peut procurer une plus grande souplesse d'utilisation en permettant de changer des cartes 9 à volonté. Ainsi, le système pourra plus aisément servir à collecter des informations dans des lecteurs de types différents et à servir dans différents types d'applications

## Revendications

1. Système de collecte d'informations pour lecteur de cartes caractérisé en ce qu'il comporte :
- une première partie planaire (1) similaire à la partie d'enfichage d'une carte dans un lecteur et possédant des plages de connexions (10) affleurant la surface de la partie planaire pour permettre une transmission série d'informations du lecteur vers le système de collecte par le biais de contacts du lecteur normalement utilisés pour entrer en contact avec des plages de connexion d'une carte ;
- une deuxième partie (2) comportant un connecteur (20) de type permettant une transmission parallèle d'informations ;
- une troisième partie (3) comportant des circuits (4,4',5,6,7,8) permettant de stocker les données reçues sous forme série par les plages de connexion (10) et de les retransmettre à la demande sous forme parallèle sur le connecteur (20).

2. Système de collecte selon la revendication 1, caractérisé en ce que les circuits comportent une mémoire de données (5) pour stocker les informations, un microprocesseur de commande du système (4) et sa mémoire programme (4'), une horloge (6).

3. Système selon la revendication 1, caractérisé en ce que les plages de connexion (10) se présentent sous la forme d'un connecteur ISO.

4. Système selon la revendication 1, caractérisé en ce qu'il se présente sous la forme générale d'une carte.

5. Système selon la revendication 1, caractérisé en ce que le connecteur (20) est un connecteur femelle de type PCMCIA.

6. Système selon la revendication 1, caractérisé en ce que le connecteur (20) est un connecteur mâle et en ce que le système comporte une carte supplémentaire (9) possédant un connecteur femelle (20') enfichable dans le connecteur mâle (20) ainsi que des circuits connectés à ce connecteur femelle et comprenant une mémoire de données (5) pour stocker les informations sous la commande d'un microprocesseur (7) du système et de sa mémoire de programme.

## Patentansprüche

1. Informationssammelsystem für Kartenlesegerät, dadurch gekennzeichnet, dass es besteht aus :
- einem ersten flächigen Teil (1), ähnlich dem Einsteckteil einer Karte in ein Lesegerät, mit Anschlussbereichen (10), die an der Oberfläche des flächigen Teils anliegen, um eine serielle Übertragung von Informationen vom Lesegerät zum Sammelsystem zu ermöglichen, über Kontakte des Lesegeräts, die normalerweise verwendet werden, um mit den Anschlussbereichen einer Karte in Kontakt zu treten ;
- einem zweiten Teil (2) mit einem Steckverbinder (20) eines Typs, der eine parallele Übertragung von Informationen ermöglicht ;
- einem dritten Teil (3) mit Schaltkreisen (4, 4', 5, 6, 7, 8), die das Speichern der in Serie von den Anschlussbereichen (10) empfangenen Daten und auf Wunsch ihre Rückübertragung in paralleler Form an den Steckverbinder (20) ermöglichen.

2. Sammelsystem nach Anspruch 1, dadurch gekennzeichnet, dass die Schaltkreise einen Datenspeicher (5) umfassen, um die Informationen zu speichern, einen Mikroprozessor zum Steuern des Systems (4) und seinen Programmspeicher (4'), ein Zeitwerk (6).

3. System nach Anspruch 1, dadurch gekennzeichnet, dass die Anschlussbereiche (10) die Form eines ISO-Steckverbinders aufweisen.

4. System nach Anspruch 1, dadurch gekennzeichnet, dass es eine allgemeine Kartenform aufweist.

5. System nach Anspruch 1, dadurch gekennzeichnet, dass der Steckverbinder (20) eine Kontakthülse des Typs PCMCIA ist.

6. System nach Anspruch 1, dadurch gekennzeichnet, dass der Steckverbinder (20) ein Kontaktstift ist, und dass das System eine zusätzliche Karte (9) umfasst, mit einer Kontakthülse (20'), die auf den Kontaktstift (20) gesteckt werden kann, sowie an diese Kontakthülse angeschlossene Schaltkreise, und mit einem Datenspeicher (5) zum Speichern der Informationen durch Steuerung eines Mikroprozessors (7) des Systems und seines Programmspeichers.

## Claims

1. System of data gathering for a card reader characterized in that it comprises:
- a planar first part (1) similar to the part for plugging in a card into a reader and that has connection ranges (10), flush with the surface of the planar part to enable the serial transmission of information from the reader to the gathering system via reader contacts that are normally used to establish contact with the connection ranges of a card;
- a second part (2) comprising a plug (20) of a type that will permit the parallel transmission of information;
- a third part (3) comprising circuits (4, 4', 5, 6,7, 8) that enables the storage of data received in serial form by the connection ranges (10) and the retransmission of said data on request in parallel form on the plug (20).

2. Gathering system according to claim 1, characterized in that the circuits comprise a data storage (5) to store information, a microprocessor for controlling the system (4) and its programmed memory(4'), a clock (6).

3. System according to claim 1, characterized in that the connection ranges (10) are presented in the form of an ISO plug.

4. System according to claim 1, characterized in that it is presented in the general form of a card.

5. System according to claim 1, characterized in that the plug (20) is a female plug of type PCMCIA.

6. System according to claim 1, characterized in that the plug (20) is a male plug and in that the system comprises an additional card (9) having a female plug (20') that can be plugged into the male plug (20) as well as circuits connected to this female plug and comprising a data storage to store information controlled by a microprocessor (7) of the system and its program storage.
